# EUROPÄISCHE PATENTSCHRIFT

(11) **EP 1 629 716 B1**
(45) Veröffentlichungstag und Bekanntmachung des Hinweises auf die Patenterteilung: **11.10.2006**
(21) Anmeldenummer: 05017933.2
(22) Anmeldetag: 18.08.2005
(51) Int. Cl.: A01M 7/00

(54) **Landwirtschaftliche Feldspritze**
Agricultural sprayer
Pulvérisateur agricole

(30) Priorität: 24.08.2004 DE 102004040807
(43) Veröffentlichungstag der Anmeldung: 01.03.2006
(73) Patentinhaber: Amazonen-Werke H. Dreyer GmbH & Co. KG, 49205 Hasbergen (DE)
(72) Erfinder: Austermann, Stefan, 48346 Ostbevern (DE)

(56) Entgegenhaltungen:
- EP-A- 1 435 200
- DE-A1- 19 533 470
- ANONYM: "Amazone UF 1501 - UF 1801" INTERNET ARTIKEL, [Online] 31. Juli 2004 (2004-07-31), XP002355049 Gefunden im Internet: URL:http://web.archive.org/web/20040731151 647/http://et.amazone.de/files/pdf/MI729.p df> [gefunden am 2005-11-17]

## Beschreibung

Die Erfindung betrifft eine landwirtschaftliche Feldspritze gemäß des Oberbegriffes des Patentanspruches 1.

Eine derartige Feldspritze mit einem entsprechenden Flüssigkeitskreislauf ist durch den Prospekt Amazone UF 1501, UF 1801 mit Druckvermerk MI729/S235 (D) 10.03 bekannt. In dem dort dargestellten Flüssigkeitskreislauf sind die Reglerrückläufe und Rückläufe der Teilbreiten zwischen Einleitung in den Haupttank oder Einleitung in die Saugseite der Pumpe durch einen Umschalthahn umschaltbar. Mittels dieses Umschalthahns kann der Rücklauf des Druckregelventils derart umgeschaltet werden, dass die Spritzbrühe entweder in den Behälter oder in die Saugleitung der Pumpen eingeleitet wird. In die Saugseite wird der Rücklauf umgeleitet, wenn die Spritze mit Frischwasser gespült werden soll und die im Haupttank verbliebene Brühe nicht verdünnt werden soll.

Teilweise vergisst der Bediener der Maschine diese Umschaltung, so dass Fehlbedienungen vorkommen können.

Der Erfindung liegt die Aufgabe zugrunde, mit einfachen Maßnahmen die Anzahl der Umschalthähne und somit Fehlbedienungen zu reduzieren.

Diese Aufgabe wird erfindungsgemäß durch das kennzeichnende Merkmal des Patentanspruches 1 gelöst. Infolge dieser Maßnahmen wird eine Reduzierung der Umschaltventile erreicht, hierdurch ergibt sich eine Verminderung der Fehlbedienung. Das in der Rücklaufleitung angeordnete Rückschlagventil öffnet erst bei einem anstehenden Druck von ca. 0,6 bar. Hierdurch wird sicher gestellt, dass auch aus externen Flüssigkeitsvorräten aus einer Tiefe von ca. 6m Flüssigkeit angesaugt werden kann. Der Öffnungsdruck darf jedoch auch nicht zu hoch sein, weil der Öffnungsdruck andererseits den niedrigst möglichen Spritzdruck bestimmt.

Durch die erfindungsgemäße Maßnahme wird erreicht, dass sich der Brühekreislauf über das hydraulische Rührwerk entlüftet. Durch den Widerstand des Rücklaufes durch das im Bereich von 0,4-0,8 bar, vorzugsweise im Bereich von 0,6 bar öffnende Rückschlagventil wird ein ausreichender Widerstand geschaffen, um eine Ansaugtiefe der Pumpe von 4-8m zu gewährleisten. Des weiteren unterstützt der Widerstand des Rückschlagventils im Rücklauf die Entlüftung des Systems über das Rührwerk.

Eine vorteilhafte Einleitung der Rücklaufleitung in die Saugleitung wird dadurch gewährleistet, dass die verschiedenen bei Spritzbetrieb aktiven Rücklaufleitungen zu einer in die Saugleitung mündenden Sammelleitung zusammengefasst sind.

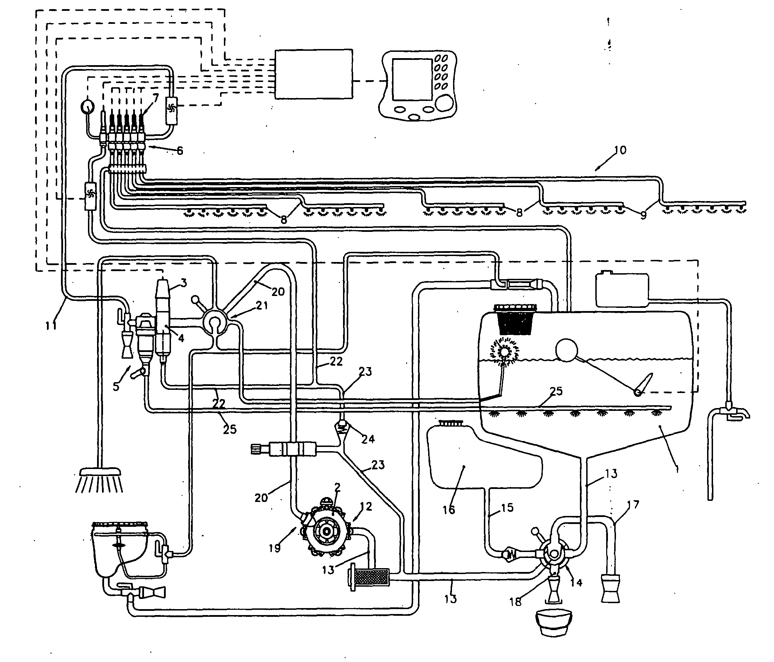

Weitere Einzelheiten der Erfindung sind der Beispielsbeschreibung und der Zeichnung zu entnehmen.

Die Zeichnung zeigt
den Flüssigkeitsplan einer Feldspritze in Prinzipdarstellung.

Die Feldspritze weist unter anderem einen Flüssigkeitstank 1, eine motorisch angetriebene Pumpe 2, ein über ein Stellmotor 3 einstellbares Regelventil 4 aufweisende Dosierarmatur 5, die Teilbreitenschaltventile 6 mit den motorischen Einstellgliedern 7, die zu den einzelnen Teilbreiten 8, mit Spritzdüsen 9 bestückten Verteilergestänge 10 führende Spritzleitung 11 auf.

Auf der Saugseite 12 der Pumpe 2 ist die Saugleitung 13 angeschlossen, die unter Zwischenschaltung eines zentralen Umschaltventils 14 im unteren Bereich des Flüssigkeitstank 1 mündet. An dem Umschaltventil 14 ist über die Leitung 15 der Spülwasserbehälter 16 angeschlossen. An dem Umschaltventil 14 können noch weitere Leitungen 17 zum externen Anschluss von Wassertanks, Ansaugen aus Gewässern sowie eine Ablaufleitung 18 angeschlossen sein. Auf der Druckseite 19 der Pumpe 2 ist eine Druckleitung 20 angeordnet, die unter Zwischenschaltung eines weiteren Umschaltventils 21 zu der Dosierarmatur 5 und weiterer Einrichtungen der Feldspritze führt. Die verschiedenen Rücklaufleitungen 22 sind zu einer Sammelrücklaufleitung 23 zusammengefasst. Die Rücklaufleitung 23 mündet zwischen der Saugseite 12 der Pumpe 2 und dem Umschaltventil 14 in die Saugleitung 13. In der Rücklaufleitung 23 ist vor der Einmündung der Rücklaufleitung 23 in die Saugleitung 13 ein Rückschlagventil 24 angeordnet. Dieses Rückschlagventil 24 öffnet bei einem Druck zwischen 0,4-0,8 bar, vorzugsweise im Bereich 0,6 bar. Dies bedeutet, dass in der Rücklaufleitung 23 vor dem Rückschlagventil 24 ein entsprechender Druck aufgebaut werden muss, damit die Flüssigkeit über das Rückschlagventil 24 in die. Saugleitung 13 gelangen kann. Dies bedeutet ebenfalls, dass die Pumpe 2 über die Saugleitung 13 bei entsprechender Stellung des Umschaltventils 14 über die externe Befüllleitung 17 Flüssigkeit aus einer Tiefe, bei einem Öffnungsdruck von 0,6 bar aus 6m ansaugen kann und hierbei keine Flüssigkeit aus der Rücklaufleitung 23 vor dem Rückschlagventil 24 aus dem System ansaugt.

Des weiteren wird bei dem Rührvorgang des Umrührens der Brühe in dem Flüssigkeitstank durch die Rührleitung 25 durch das Rückschlagventil 24 sichergestellt, dass ein relativ schnelles Entlüften des Flüssigkeitssystems über die Rührleitung 25 erfolgt.

## Patentansprüche

1. Landwirtschaftliche Feldspritze mit einem Flüssigkeitstank (1), einer Flüssigkeitspumpe (2), deren Saugleitung (13) unter Zwischenschaltung eines Umschaltventils (14) im unteren Bereich des Flüssigkeitstanks und in zumindest einer externen Befüllleitung mündet und deren Druckleitung (20) unter Zwischenschaltung eines Umschalventils (21) zu einer Dosierarmatur (5) und weiteren Einrichtungen der Feldspritze führt, und zumindest einer zwischen der Saugpumpe (2) und dem Umschaltventil (14) in die saugleitung (13) einmündenden Rücklaufleitung (23), **dadurch gekennzeichnet, dass** vor der Einmündung der Rücklaufleitung (23) in die Saugleitung (13) in der Rücklaufleitung (23) ein bei einem Druck zwischen 0,4 - 0,8 bar, vorzugsweise im Bereich von 0,6 bar öffnendes Rückschlagventil (24) angeordnet ist.

2. Feldspritze nach Anspruch 1, **dadurch gekennzeichnet, dass** die verschiedenen bei Spritzbetrieb aktiven Rücklaufleitungen (22) zu einer in die Saugleitung (13) mündenden Sammelleitung (23) zusammengefasst sind.

## Claims

1. Agricultural spraying machine having a liquid product tank (1), a liquid pump (2), the suction line (13) of which, with a changeover valve (14) connected in-line, opening out into the lower region of the liquid product tank and into at least one external filling line and the pressure line (20) of which, with a changeover valve (21) connected in-line, leading to a metering device (5) and additional devices of the spraying machine, and at least one return line (23), that opens out into the intake line (13) between the intake pump (2) and the changeover valve (14), **characterised in that** a non-return valve (24), which opens at a pressure between 0.4 and 0.8 bar, preferably in the region of 0.6 bar, is disposed in the return line (23) upstream of the point where the return line (23) opens out into the intake line (13).

2. Spraying machine according to claim 1, **characterised in that** the various return lines (22) that are active during spraying are combined to form a collecting line (23) that opens out into the intake line (13).

## Revendications

1. Pulvérisateur agricole comportant un réservoir à liquide (1), une pompe à liquide (2) dont la conduite d'aspiration (13) débouche avec interposition d'une vanne de commutation (14) dans la zone inférieure du réservoir de liquide et dans au moins une conduite de remplissage externe, la conduite de refoulement (20) étant reliée à un robinet de dosage (5) et à d'autres installations du pulvérisateur avec interposition d'une vanne de commutation (21), et au moins une conduite de retour (23) entre la pompe d'aspiration (2) et la vanne de commutation (14), débouchant dans la conduite d'aspiration (13),
**caractérisé en ce qu'**
avant de déboucher dans la conduite de retour (23), la conduite d'aspiration (13), la conduite de retour (23) comporte un clapet antire-tour (24) s'ouvrant à une pression comprise entre 0,4-08 bar, de préférence au niveau de 0,6 bar.

2. Pulvérisateur agricole selon la revendication 1,
**caractérisé en ce que**
les différentes conduites de retour (22) activées pour le fonctionnement du pulvérisateur sont regroupées dans une conduite collectrice (23) débouchant dans la conduite d'aspiration (13).
